# EUROPÄISCHE PATENTSCHRIFT

(11) **EP 2 867 943 B1**
(45) Veröffentlichungstag und Bekanntmachung des Hinweises auf die Patenterteilung: **03.06.2020**
(21) Anmeldenummer: 13727198.7
(22) Anmeldetag: 06.06.2013
(51) Int. Cl.: H01M 8/04007, H01M 8/04089, B60L 50/72, B60L 58/33, F28D 21/00, H01M 8/04701

(54) **ABLUFTFÜHRUNG EINES BRENNSTOFFZELLENSTACKS IN EINEM KRAFTFAHRZEUG**
EXHAUST GUIDING OF A FUEL CELL STACK IN A MOTOR VEHICLE
GUIDAGE DE L'AIR ÉVACUÉ D'UN EMPILEMENT DE PILES À COMBUSTIBLE DANS UN VÉHICULE AUTOMOBILE

(30) Priorität: 02.07.2012 DE 102012211421
(43) Veröffentlichungstag der Anmeldung: 06.05.2015
(73) Patentinhaber: Bayerische Motoren Werke Aktiengesellschaft, 80809 München (DE)
(72) Erfinder: BAUER, Michael, 85774 Unterföhring (DE); BUCHNER, Andreas, 82237 Steinebach (DE); HAASE, Stefan, 85247 Schwabhausen (DE)
(86) Internationale Anmeldenummer: PCT/EP2013/061742
(87) Internationale Veröffentlichungsnummer: WO 2014/005793

(56) Entgegenhaltungen:
- WO-A1-2011/098279
- DE-A1-102008 009 118
- JP-A- H0 729 587
- US-A- 4 362 789

## Beschreibung

Die Erfindung betrifft die Abluftführung eines Brennstoffzellenstacks, insbesondere in einem Kraftfahrzeug. Zum Stand der Technik wird beispielshalber auf die DE 10 2008 029 529 A1 sowie auf die US 4,362,789 A und die DE 10 2008 009 118 A1 verwiesen.

Brennstoffzellen, zumindest solche der PEM-Bauart, müssen im Betrieb gekühlt werden, weshalb für einen sog. Brennstoffzellenstack, der durch einen Stapel mehrerer Einzel-Brennstoffzellen gebildet ist, eine geeignete Kühlvorrichtung vorzusehen ist. Eine solche Kühlvorrichtung ist zumeist durch einen Kreislauf für ein Wärmeträgermittel und einen Wärmetauscher gebildet, in dem umgewälztes Wärmeträgermittel, das im Brennstoffzellenstack Wärme aufnimmt, diese aufgenommene Wärmemenge an einen durch den vorliegend verallgemeinert als Kühlerstruktur bezeichneten Wärmetauscher hindurchgeführten Umgebungsluftstrom abgibt. Es sind aber auch luftgekühlte Brennstoffzellenstacks bekannt, die selbst eine geeignete Kühlerstruktur bilden bzw. enthalten, an der bzw. durch die ein Umgebungsluftstrom zur Kühlung vorbei bzw. hindurch geführt wird, vgl. hierzu beispielsweise die nicht vorveröffentlichte deutsche Patentanmeldung mit dem Aktenzeichen 10201220645.1. In den meisten Fällen wird dabei für die Förderung des Umgebungsluftstromes durch die Kühlerstruktur - sei es ein eigenständiger Wärmetauscher oder eine im Brennstoffzellenstack integrierte Kühlerstruktur - eine eigenständige Fördervorrichtung (Gebläse, Ventilator, etc.) benötigt, die teilweise einen relativ hohen Energiebedarf aufweist.

Aus der eingangs genannten US 4,362,789 A ist ein System zur Kühlung und Rezirkulation von Kathodenabgas eines Brennstoffzellen-Stacks bekannt. Dabei wird Wasser als Kühlmittel in eine Venturi-Vorrichtung gesprüht und reißt dabei das Kathodenabgas mit durch die Venturi-Vorrichtung und zurück in die Brennstoffzelle.

Aufgabe der vorliegenden Erfindung ist es, die Förderung eines Umgebungsluftstroms durch eine Kühlerstruktur eines Brennstoffzellen-Systems zu vereinfachen.
Die Lösung dieser Aufgabe besteht gemäß den Merkmalen des Anspruchs 1 in einer Abluftführung eines Brennstoffzellenstacks, insbesondere in einem Kraftfahrzeug, mit einer zur Funktionsumgebung des Brennstoffzellenstacks gehörenden Kühlvorrichtung in Form einer von Umgebungsluft durchströmten Kühlerstruktur, wobei die Abluft des Brennstoffzellenstacks solchermaßen vor die genannte Kühlerstruktur geführt ist, das diese in Durchströmungsrichtung durch die Kühlerstruktur strömt und dabei nach dem Strahlpumpen-Prinzip Umgebungsluft mitreißt. Vorteilhafte Aus- und Weiterbildungen sind Inhalt der Unteransprüche.

Erfindungsgemäß wird die Abluft des Brennstoffzellenstacks - bei PEM-Brennstoffzellen handelt es sich dabei um den Kathoden-Abluftstrom - zumindest anteilig durch die Kühlerstruktur hindurchgeführt, wobei der Druck bzw. Überdruck dieses Abluftstromes zur Förderung von Umgebungsluft (als Kühlluft) ausgenutzt wird. Erfindungsgemäß ist hierzu der Abluftstrom bzw. zumindest ein Teil des selben solchermaßen an die Kühlerstruktur herangeführt, dass dieser mit Eintritt in die Kühlerstruktur und darauffolgendem Durchströmen derselben weitere Umgebungsluft mit in die Kühlerstruktur hinein mitnimmt bzw. mitreißt. Insofern macht sich die vorliegende Erfindung das grundlegend bekannte Strahlpumpen-Prinzip (insbesondere bekannt von einer durch eine geeignete Rohr-Zusammenführung gebildeten Saugstrahlpumpe) zu Nutze. Ausdrücklich sei dabei darauf hingewiesen, dass es an einer Kühlerstruktur keineswegs erforderlich ist, die Brennstoffzellen-Abluft sowie die Umgebungsluft in einer Rohr-Zusammenführung vor bzw. in die Kühlerstruktur hinein zu leiten, vielmehr ist es ausreichend, wenn die Abluft des Brennstoffzellenstacks geeignet vor die Kühlerstruktur geführt ist, beispielsweise in mehreren zumindest annähernd parallel zur Anströmfläche der Kühlerstruktur ausgerichteten Rohren, aus denen die Abluft über Austrittsöffnungen in der Wand dieser Rohre ("Rohrwand"), die unter einem geeigneten Winkel zur Durchströmungsrichtung des (gewünschten) KühlLuftstromes durch die Kühlerstruktur hindurch liegen, austritt. Stets lässt sich auf die vorgeschlagene Weise das im Abluftstrom des Brennstoffzellenstacks vorhandene Druck-Potential zur Förderung von Umgebungsluft und somit von Kühlluft durch die Kühlerstruktur nutzen.

Was die Brennstoffzellen-Abluft bzw. den besagten Abluftstrom betrifft, so resultiert deren/dessen Druck-Potential bzw. Überdruck aus der zuvor erfolgten Förderung von Umgebungsluft als Reaktionsluft in den Brennstoffzellenstack hinein, die dort an einer der Elektroden - im Falle einer PEM-Brennstoffzelle an den Kathoden - mit dem an die andere Seite der jeweiligen Kathoden-Elektrolyt-Anoden-Einheit herangeführten Brennstoffstrom (insbesondere in Form von Wasserstoff) in bekannter Weise reagiert, um anschließend als Abluftstrom aus dem Brennstoffenzellenstack abgeführt zu werden. Üblicherweise ist die Temperatur und insbesondere der Feuchtigkeitsgehalt der Brennstoffzellenstack-Abluft gegenüber der den Brennstoffzellen zunächst als Reaktionsluft zugeführten Umgebungsluft erhöht. Im Sinne einer vorteilhaften Weiterbildung der Erfindung kann daher die Abluft des Brennstoffzellenstacks vor der erfindungsgemäßen Heranführung an die Kühlerstruktur in einem geeigneten Wärmetauscher (vorzugsweise unter abermaliger Zuhilfenahme von Umgebungsluft) abgekühlt werden, wobei vorteilhafterweise Feuchtigkeit auskondensiert, so dass keine ansonsten zumeist feststellbare Nebel-Bildung durch den Abluftstrom des Brennstoffzellenstacks erfolgt.

Im Sinne einer vorteilhaften Weiterbildung der vorliegenden Erfindung kann die Anströmrichtung und/oder die Anströmgeschwindigkeit der Brennstoffzellen-Abluft gegenüber der Kühlerstruktur und somit beispielsweise die Ausströmrichtung und/oder die Ausströmgeschwindigkeit der Abluft aus den besagten Rohren und allgemein aus irgendeinem System, über das die Brennstoffzellen-Abluft in erfindungsgemäßer Weise vor die Kühlerstruktur geführt ist, gezielt veränderbar sein. Beispielsweise können hierfür die Austrittsöffnungen in der Rohrwand der besagten Rohre mittels eines Schiebers oder dgl. veränderbar sein. Mittels Schiebern ist beispielsweise die Querschnittsfläche der besagten Austrittsöffnungen veränderbar, womit sich unterschiedliche Ausströmgeschwindigkeiten für den Btrennstoffzellen-Abluftstrom ergeben; durch Schieber oder dergleichen ist aber auch der Anströmwinkel, unter welchem der Brennstoffzellen-Abluftstrom auf die Kühlerstruktur auftrifft, veränderbar. Im Falle der beispielhaft genannten Rohre, durch die die Brennstoffzellen-Abluft vor die Kühlerstruktur geführt ist, ist es aber auch möglich, die Rohre selbst um ihre Längsachse zu drehen und damit die Anströmrichtung des Abluftstromes gegenüber der Kühlerstruktur zu verändern. Wenn mehrere Rohre vorgesehen sind, durch die die Brennstoffzellen-Abluft vor die Kühlerstruktur geführt ist, so können auch einige dieser Rohre in Abhängigkeit von unterschiedlichsten Randbedingen quasi stillgesetzt, d.h. nicht mit Brennstoffzellen-Abluft beaufschlagt werden, womit der gesamte Abluftstrom auf eine geringere Zahl von Rohren verteilt und damit die Strömungsgeschwindigkeit des Abluftstromes in diesen wenigeren Rohren vergrößert wird. An dieser Stelle sei ausdrücklich darauf hingewiesen, dass es keineswegs erforderlich ist, den Brennstoffzellen-Abluft wie fakultativ vorgeschlagen über mehrere Rohre mit in der Rohrwand vorgesehenen Austrittsöffnungen an die Luft-Anströmseite der Kühlerstruktur heran zu führen; vielmehr können hierfür auch andere Luftführungssysteme zum Einsatz kommen.

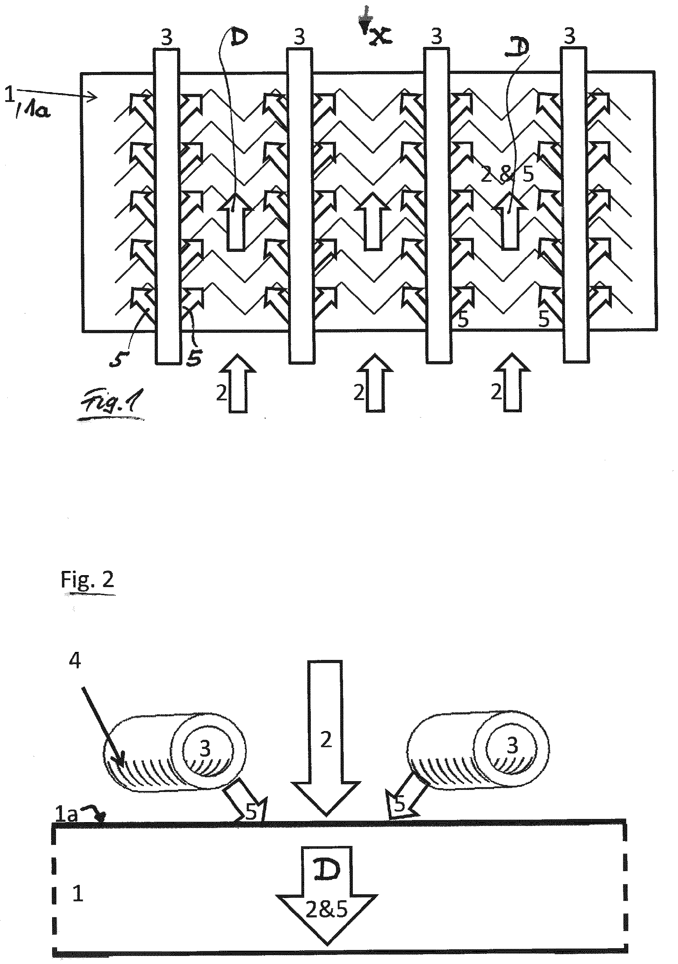

Die beigefügten Prinzipskizzen zeigen ein Ausführungsbeispiel der Erfindung, wobei **Fig.1** die Ansicht einer erfindungsgemäßen Abluftführung vor der Stirnseite einer Kühlerstruktur (mit frontaler Aufsicht auf diese) prinzipiell zeigt und in **Fig.2** eine Teil-Ansicht X aus Fig.1 dargestellt ist. Nicht dargestellt ist dabei ein Brennstoffzellenstack als solcher und ebenfalls nicht dargestellt ist ein Kraftahrzeug, insbesondere ein PKW, in welchem ein Brennstoffzellenstack und eine mit der Bezugsziffer 1 gekennzeichnete Kühlerstruktur bspw. in Form eines im wesentlichen üblichen Luft-Wasser-Wärmetauschers, wie er in Form eines "Kühlers" zur Kühlung einer als "heutiges" KFZ-Antriebsaggregat fungierenden Brennkraftmaschine in mannigfachen Ausgestaltungen in Kraftfahrzeugen insbesondere in deren Frontbereich verbaut ist, wo die Kühlerstruktur 1 besonders gut vom Fahrtwind des bewegten Kraftfahrzeugs angeströmt wird,.

Durch die Kühlerstruktur 1 kann Umgebungsluft gemäß den Pfeilen 2 (vgl. insbesondere Fig.2) mit der Durchströmungsrichtung D hindurch strömen und dabei Wärme von einem nicht gezeigten Wärmeträgermittel (vorzugsweise Wasser mit einem Frostschutzmittel versetzt), welches mit der Umgebungsluft 2 (die Bezugsziffer 5 bezeichnet auch die Brennstoffzellen-Abluft selbst) im Wärmetausch stehend ebenfalls durch die Kühlerstruktur 1 hindurch geführt ist, aufnehmen. In Figur 1 sollten die gezeigten Pfeile 2, 5, D in korrekter Weise senkrecht zur Zeichenebene stehen; nur der vereinfachten Darstellbarkeit wegen sind diese Pfeile 2, 5, D in der Zeichenebene liegend dargestellt.
Damit Umgebungsluft 2 wie dargestellt die Kühlerstruktur 1 durchströmen kann, ist diese wie grundsätzlich bekannt aufgebaut, was in den vorliegenden Figuren der Einfachheit halber nicht detailliert dargestellt ist; im wesentlichen ist die Kühlerstruktur 1 durch eine Vielzahl geeignet geführter Rohre, in denen das Wärmeträgermittel strömt und an denen eine Vielzahl von Rippen vorgesehen sind, über die die Umgebungsluft 2 als Kühlluft strömt, gebildet.

Figürlich dargestellt sind mehrere an der Zuströmseite der Umgebungsluft 2 an die Kühlerstruktur 1 vor deren Stirnfläche bzw. Anströmfläche 1a und im wesentlichen parallel zu dieser verlaufende Rohre 3, vorliegend vertikal orientiert, was jedoch auch andersartig gestaltet sein kann. In Fig.2 sind diese Rohre 3 der besseren Erkennbarkeit wegen leicht perspektivisch bzw. geneigt dargestellt
In diesen auch parallel (d.h. gleichermaßen) mit dem zu führenden Medium, nämlich dem Abluftstrom des Brennstoffzellenstacks, versorgten Rohren 3 ist der besagte Abluftstrom des Brennstoffzellenstacks geführt, d.h. in jedem einzelnen Rohr 3 strömt ein entsprechender Anteil des gesamten Abluftstromes. Es sind in diesen Rohren 3 bzw. in deren Rohrwänden eine Vielzahl von Austrittsöffnungen 4 solchermaßen angeordnet vorgesehen, dass aus jeder Austrittsöffnung 4 ein geringer Teilstrom von Brennstoffzellen-Abluft derart gerichtet austritt, dass er gemäß Pfeil 5 (die Bezugsziffer 5 bezeichnet auch die Brennstoffzellen-Abluft selbst) in die Kühlerstruktur 1 hinein und daraufhin gemäß Pfeil D durch diese hindurch strömt, wobei aufgrund des Druck-Potentials des jeweiligen Abluft-Teilstromes 5 auch etwas Umgebungsluft gemäß Pfeil 2 mit in die Kühlerstruktur 1 hinein bzw. durch diese gemäß Pfeil D hindurch mitgerissen wird, und zwar unter Nutzung des Strahlpumpen-Prinzips. Damit wird zumindest eine geringere Förderleistung für eine vorzusehende, hier jedoch nicht dargestellte Fördervorrichtung für einen Umgebungsluftstrom 2 durch die Kühlerstruktur 1 hindurch benötigt. Vorteilhafterweise wird hierbei die Brennstoffzellen-Abluft 5 auch mit der Umgebungsluft 2 vermischt und damit verdünnt, so dass selbst dann, wenn die Brennstoffzellen-Abluft 5 zuvor nicht - wie weiter oben fakultativ beschrieben - abgekühlt wird, keine Nebelbildung durch Auskondensieren der in der Brennstoffzellen-Abluft 5 enthaltenen Feuchtigkeit stattfindet. Figürlich nicht dargestellt ist eine weiter oben beschriebene vorteilhafte Weiterbildung, wonach der Austrittsquerschnitt und/oder die Austrittsrichtung der Austrittsöffnungen 4 beispielswiese mittels geeigneter Dreh-Schieber gezielt veränderbar ist.

## Patentansprüche

1. Abluftführung eines Brennstoffzellenstacks, insbesondere in einem Kraftfahrzeug mit einer Kühlvorrichtung, an welcher nach dem Strahlpumpen-Prinzip eine Förderung von Luft erfolgt,
**dadurch gekennzeichnet, dass** die Kühlvorrichtung eine zur Funktionsumgebung des Brennstoffzellenstacks gehörende und von Umgebungsluft (2) durchströmte Kühlerstruktur (1) ist, dass ein Wärmeträgermittel durch die Kühlerstruktur (1) hindurch geführt ist, wobei das Wärmeträgermittel mit der Umgebungsluft (2) im Wärmetausch steht, und dass die Abluft (5) des Brennstoffzellenstacks solchermaßen vor oder in die genannte Kühlerstruktur (1) geführt ist, das diese in Durchströmungsrichtung (D) durch die Kühlerstruktur (1) strömt und dabei nach dem Strahlpumpen-Prinzip Umgebungsluft (2) mitreißt.

2. Abluftführung nach Anspruch 1, wobei die Abluft (5) des Brennstoffzellenstacks vor der Heranführung an die Kühlerstruktur (1) abgekühlt wird.

3. Abluftführung nach Anspruch 1 oder 2, wobei die Abluft (5) des Brennstoffzellenstacks in mehreren zumindest annähernd parallel zur Anströmfläche (1a) der Kühlerstruktur (1) ausgerichteten Rohren (3) vor die Kühlerstruktur (1) geführt ist, aus denen die Abluft (5) über Austrittsöffnungen (4) in der Rohrwand, die unter einem geeigneten Winkel zur Durchströmungsrichtung (D) liegen, austritt.

4. Abluftführung nach einem der vorangegangenen Ansprüche, wobei die Anströmrichtung und/oder die Anströmgeschwindigkeit der Abluft (5) gegenüber der Kühlerstruktur (1) gezielt veränderbar ist, insbesondere indem die Austrittsöffnungen (4) in der Rohrwand der besagten Rohre (3) mittels eines Schiebers oder dgl. veränderbar sind.

## Claims

1. An exhaust-air guide of a fuel cell stack, especially in a motor vehicle, with a cooling device, in which air is conveyed in accordance with the jet pump principle,
**characterised in that** the cooling device is a cooler structure (1) belonging to the functional environment of the fuel cell stack and is passed through by ambient air (2), **in that** a heat carrier medium is guided through the cooler structure (1), the heat carrier medium exchanging heat with the ambient air (2), and **in that** the exhaust air (5) of the fuel cell stack is guided to a point upstream of, or into, said cooler structure (1) in such a way that the exhaust air flows through the cooler structure (1) in the flow direction (D) and in so doing entrains ambient air (2) in accordance with the jet pump principle.

2. An exhaust-air guide according to claim 1, wherein the exhaust air (5) of the fuel cell stack is cooled before it is guided to the cooler structure (1) .

3. An exhaust-air guide according to claim 1 or 2,
wherein the exhaust air (5) of the fuel cell stack is guided to a point upstream of the cooler structure (1) in a plurality of pipes (3) oriented at least approximately parallel to the inflow surface (1a) of the cooler structure (1), from which cooler structure (1) the exhaust air (5) emerges via outlet openings (4) in the pipe wall which are at a suitable angle to the flow direction (D).

4. An exhaust-air guide according to one of the preceding claims, wherein the inflow direction and/or the inflow speed of the exhaust air (5) with respect to the cooler structure (1) are/is variable in a targeted manner, in particular by making the outlet openings (4) in the pipe wall of said pipes (3) variable by means of a gate or the like.

## Revendications

1. Système de guidage d'air évacué d'un empilement de piles à combustible en particulier dans un véhicule automobile comprenant un dispositif de refroidissement sur lequel, un refoulement d'air est effectué selon le principe des pompes à jet,
**caractérisé en ce que**
le dispositif de refroidissement comporte une structure de refroidisseur (1) appartenant à l'environnement fonctionnel de l'empilement de piles à combustible et traversée par l'air ambiant (2), un fluide caloporteur est transféré au travers de la structure de refroidisseur (1), ce fluide caloporteur étant en échange de chaleur avec l'air ambiant (2), et l'air (5) évacué de l'empilement de piles à combustible est transféré à l'avant ou dans la structure de refroidisseur (1) de sorte que celui-ci circule dans la direction de circulation (D) au travers de la structure de refroidisseur (1) et entraîne ainsi l'air ambiant (2) selon le principe des pompes à jet.

2. Système de guidage d'air évacué conforme à la revendication 1, dans lequel l'air (5) évacué de l'empilement de piles à combustible est refroidi avant son transfert sur la structure de refroidisseur (1).

3. Système de guidage d'air évacué conforme à la revendication 1 ou 2, dans lequel l'air (5) évacué de l'empilement de piles à combustible est transféré à l'avant de la structure de refroidisseur (1) dans plusieurs tubes (3) orientés au moins essentiellement parallèlement à la surface de réception du flux (la) de la structure de refroidisseur (1), d'où l'air évacué (5) sort par des ouvertures de sortie (4) situées dans la paroi des tubes qui sont inclinées angulairement par rapport à la direction de circulation (D).

4. Système de guidage d'air évacué conforme à l'une des revendications précédentes,
dans lequel la direction de circulation et/ou la vitesse de circulation de l'air évacué (5) par rapport à la structure de refroidisseur (1), peut(peuvent) être modifiée(s) de façon ciblée en particulier du fait que les ouvertures de sortie (4) situées dans la paroi tubulaire des tubes (3) peuvent être modifiées au moyen d'un coulisseau ou similaire.
